# EUROPEAN PATENT SPECIFICATION

(11) **EP 3 426 918 B1**
(45) Date of publication and mention of the grant of the patent: **05.02.2020**
(21) Application number: 17714376.5
(22) Date of filing: 20.03.2017
(51) Int. Cl.: F03G 7/00, F04D 15/00, F17D 1/14

(54) **PUMP STATION AND PIPELINE OPTIMIZATION**
PUMPSTATION UND ROHRLEITUNGSOPTIMIERUNG
STATION DE POMPAGE ET OPTIMISATION DE PIPELINE

(30) Priority: 19.04.2016 US 201615132344
(43) Date of publication of application: 16.01.2019
(73) Proprietor: Siemens Aktiengesellschaft, 80333 München (DE)
(72) Inventor: FOWLER, Edward A., Houston, Texas 77095 (US); FRANKFURT, Harley, Calgary, Alberta T3H 3C8 (CA); KLÖPPNER, Gerd, 91083 Baiersdorf (DE); LEE, You Hau, Houston, Texas 77007 (US)
(74) Representative: Isarpatent
(86) International application number: PCT/US2017/023157
(87) International publication number: WO 2017/184281

(56) References cited:
- IL-A- 158 679
- US-A- 4 584 654
- US-A1- 2007 177 982
- US-A1- 2008 208 483
- US-A1- 2011 251 938

## Description

### BACKGROUND

The present embodiments relate to optimizing pump operation for fluid pipelines. One or multiple pump stations are provided along a pipeline to pump crude oil or other fluid. When the pump systems (pump + driver) do not operate at the most efficient configuration, the cost for pumping increases. Given the many pumps along a pipeline, the inefficiencies may sum-up to large quantities, with respect to utility costs (e.g., electricity, gas, oil for driver) and CO2 footprint. Inefficient operation may result in increased mechanical and cyclical hydraulic stresses, as well as wear and tear on the pipe and pipeline components, further increasing costs due to increased maintenance and unplanned repairs and shutdowns.

Pipeline batches or type of fluid (e.g., light versus heavy crude oil) may be changed. Pumps that operate efficiently for one batch may not operate as efficiently for another batch. For instance, operating costs to a pipeline operator are further increased when a pump stations peak electric use spikes during a product batch change. The energy usage spike occurs when a sudden and even gradual increase in product density and viscosity enters a pump, causing energy use to spike to maintain the output pressure. If the spike in energy use reaches a level sufficiently above the level agreed to between the operator and the electric utility provider, the energy fees for electricity may be increased above a regular rate. These sudden spikes often result in increased fees for electricity that are billed for an entire usage period (e.g., 1 month) even if the spike only lasts for a few minutes or less.

These efficiency and energy usage problems may cost several millions of dollars a year and tens of millions of dollars in electric utility fees over the life cycle of the pipeline. When crude oil is expensive and profits abundant, there is less incentive to solve these problems. With low crude oil prices, pipeline operators may become more sensitive to expenses and inefficiencies.

Document IL 158 679 A describes a system for marking a hydrocarbon fluid by a marker, for determining the authenticity of the fluid, the fluid flowing from a source to a destination. The system includes a sensor for determining a fluid value of a fluid property of the fluid and a marker controller for admitting a selected amount of the marker to the fluid.

### BRIEF SUMMARY

By way of introduction, the preferred embodiments described below include methods, systems, and computer readable media for pump station and pipeline optimization. The pump systems used in a pump station are selected based on the type of fluid or batch, actual pump performances, and maintenance requirements. The selection is of the more efficient pumps for that batch with respect to operation and maintenance constraints and requirements. Less efficient pumps are not used. When a new batch is detected, the selection is performed again for that new batch, which may result in a different combinations of pump systems for a given pump station. If variable speed pumps are available, the efficiency at the desired speed is used for selection. The cost of energy by pump station may alternatively or additionally be used to select the speed or combination of pumps. The pump station operation is optimized for efficiency of pumps and/or cost of energy for the different pumps.

In a first aspect, a system is provided for pump station optimization. A pump station has a plurality of pump systems for a pipeline. A sensor is configured to sense the type of fluid in the pipeline. A memory is configured to store efficiency values as a function of the type of fluid and the pump speed for each of the pump systems. A controller is configured to select a sub-set of the pump systems as a function of type and the corresponding efficiencies of the pumps. The sub-set is controlled to provide outlet pressure for the pump station.

In a second aspect, a method is provided for pump station optimization. Batches in a pipeline at first and second pump stations are determined. Rates for first and second local distribution companies of power to the first and second pump stations, respectively, are accessed. Pump systems of the first pump station and pump systems of the second pump station are configured to pump the batches in the pipeline. A contribution of the first pump station relative to the second pump station is set based on the rates.

In a third aspect, a system is provided for pump station optimization. A plurality of pump systems includes at least one variable speed driver. A controller is configured to select a speed of the first variable speed pump based on efficiency of the first variable speed pump as a function of speed.

The present invention is defined by the following claims, and nothing in this section should be taken as a limitation on those claims. Further aspects and advantages of the invention are discussed below in conjunction with the preferred embodiments and may be later claimed independently or in combination.

### BRIEF DESCRIPTION OF THE DRAWINGS

The components and the figures are not necessarily to scale, emphasis instead being placed upon illustrating the principles of the invention. Moreover, in the figures, like reference numerals designate corresponding parts throughout the different views.
Figure 1 illustrates one embodiment of a pump station for a pipeline with optimized selection of the pump systems;
Figure 2 illustrates use of utility costs for relative pump contribution between pump stations along a pipeline;
Figure 3 illustrates one embodiment of optimization of a variable speed (VFD) pump system; and
Figure 4 is a flow chart diagram of one embodiment of a method for pump station and pipeline optimization.

### DETAILED DESCRIPTION OF THE DRAWINGS AND PRESENTLY PREFERRED EMBODIMENTS

The assignment and operation of pump systems in pump stations of a pipeline are optimized. Each pump stations control system actively measures process data and may calculate actual pump system efficiencies. The efficiencies are correlated to pump operation (e.g., speed) and fluid type (batch) properties (e.g., densities and/or viscosities). The efficiencies are rated from most efficient to least efficient. Pump system assignments are adjusted to provide the most efficient operation based on local electric utility rates of the pump station and up/down stream stations, as well as other applicable operation strategies including maintenance requirements and/or driver availability. Pump load at a higher cost station may be reduced and appropriately shifted to the lower cost up/down station. Additionally, the unit control system actively compares actual pump system performances to manufacturers design data and curves to identify deviations between actual and designed performances. Deviations may be automatically drawn to a display to show trending or for operator notifications.

The optimization using efficiency and/or utility cost and/or availability may work for the single variable speed pump system, multiple pump systems in a pump station, and/or across pump stations. The efficiency, utility cost, and/or availability may be used to select pump systems at a pump station and/or contribution between pump stations to increase efficiency and/or decrease cost and/or equipment runtimes. In one embodiment, the pump station optimization systems are real-time coupled to their local distribution company (i.e. electric utility) to obtain current rate schedules for optimization. The optimization algorithm may also include condition monitoring, operation, maintenance data, and constraints. At the pump station level, the optimization may be performed without routing through supervisory control and data acquisition (SCADA) at the pipeline level, reducing delays, as long as pump station performances as per pipeline operation requirements are attained.

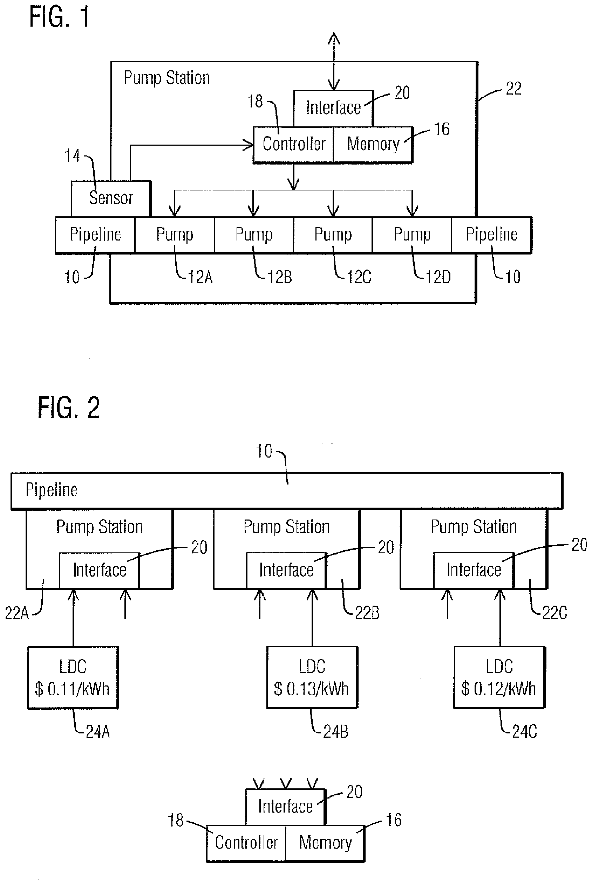

Figure 1 illustrates a system for pump station optimization. The control system optimizes operation of a variable speed pump, pump selection in a pump station, and/or distribution of pump loads between different pump stations based on efficiency by type of fluid, energy cost, equipment availability, or combinations thereof. Figure 1 and the other figures are discussed below in the context of an oil pipeline for transporting crude. The optimization may apply to transport of water, liquid hydrocarbons (e.g., crude oils), or other fluids in pipelines, pump systems in process plants, or other pipes using pumps with and without variable speed drivers. The optimization is not limited to electrical drives.

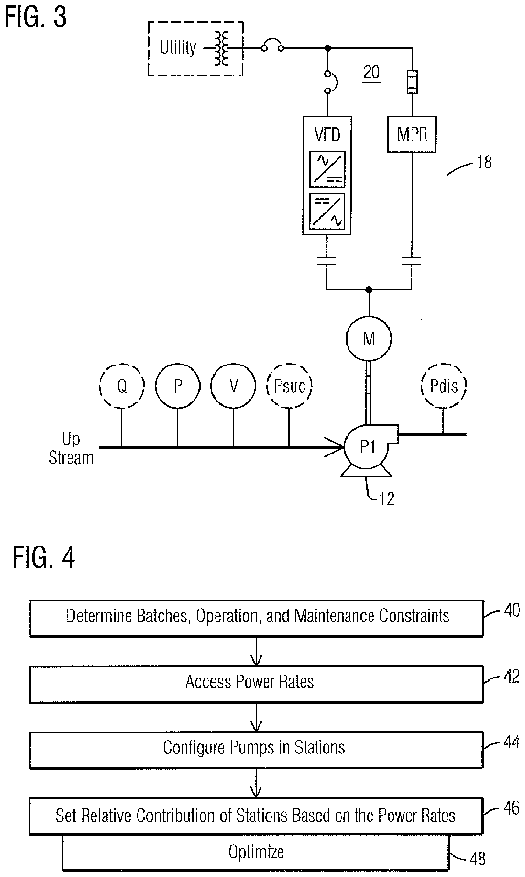

The pump station 22 of Figure 1 implements the method of Figure 4. Alternatively, different methods are implemented.

The pump station 22 includes part of the pipeline 10, a plurality of pump systems 12, one or more sensors 14, a memory 16, a controller 18, and an interface 20. Additional, different, or fewer components may be provided. For example, more or fewer pumps 12 are provided. As another example, the controller 18 is external to the pump station 22 and connects to the interface 20. In another example, additional pipelines 10 and pumps 12 are provided.

The pipeline 10 is a metal (e.g., steel or ductile iron), concrete, plastic, or other material. Oil, gas, liquid, or other fluids are transported by flow through the pipeline 10. The exterior of the pipeline 10 may be coated in insulation material. Pipeline has an elevation profile. Any size pipeline 10 may be used, such as eight inch to three-foot inner or outer diameters. Pipelines are used on land, underwater (e.g., subsea), in cold climates, in hot climates, and in temperate climates. For example, the pipeline 10 is deployed underground and/or overhead as a continental pipeline. The pipeline 10 may include joints, turns or bends, valves, or other structures.

The pump stations 22 are a configuration of pumps and drives including spare units. The pump station 22 is one of a plurality of pump stations 22 provided along the pipeline 10. The pump stations 22 are spaced regularly or irregularly along the pipeline, such as every 40 miles on average with a greater density for up-hill portions and lesser density for downhill portions. Different pump stations 22 have the same or different configurations, such as a different number of pump systems 12 and/or types of pump systems 12. The controller 18 has the same or different configurations in the different pump stations 22. Controllers of discrete pump stations 22 may be switched on/off in case of pipeline optimization.

The pump systems 12 include centrifugal pumps, but other pumps for moving fluid may be used. The pump systems 12 include a motor/turbine and may include gearing or transmission for turning the rotation or movement of the motor into fluid motion. Individual motor controllers may be included as part of the pump system 12 and/or as part of the controller 18.

The same or different types of pump system 12 are used for each pump 12A-D in the pump station 22. For example, some of the pump systems 12A-B are fixed speed pumps that operate to provide flow at a given speed and/or have a drive set to a constant output. Others of the pump systems 12C-D are variable speed pumps. A variable speed drive of the motor causes the pump 12 to operate at different speeds, providing variable flow and corresponding pressure contribution to the fluids pump characteristic line. All fixed speed, all variable speed, or any combination of fixed and variable speed pump systems 12 may be used in a given pump station 22.

The sensor 14 is a density, viscosity, or density and viscosity sensor or any other fluid property sensor. The sensor 14 or another sensor measures the rate of fluid flow, and the flow rate is monitored by controller 18 and other systems. Sensor readings may apply for inferential calculation of other fluid properties, such as the viscosity being calculated by the controller 18 based on the density. The sensor 14 is configured to sense the type of fluid in the pipeline. Fluid properties (e.g., density and/or viscosity) may distinguish between types of fluid. Any resolution or ranges of types may be used, such as light and heavy crude as a binary separation. The density and/or viscosity values may be the type of fluid, where different values are of different types. Any distinction of batches may be used. The sensor 14 provides readings or measures that distinguish between the batches.

The sensor 14 is positioned near an inlet to the pump station 22. In other embodiments, the sensor 14 is positioned outside the pump station 22. When a new batch arrives at the pump station 22, the readings from the sensor 14 may be used to determine that a new batch has arrived or will soon arrive. Similarly, for a current batch, the readings from the sensor 14 may be used to determine or confirm the type of fluid.

Other sensors may be provided. For example, an ultrasonic flow sensor, a pressure sensor, temperature, tank level, pump speed, shaft power, voltage, current, and/or energy sensors are provided. In one embodiment, pressure sensors are provided at the inlet and outlet of each pump 12A-D and/or of the pump station 22. Any process variable may be measured.

Other sensor data as well as other data and information pertinent to optimization collected and/or stored apart of controller 18 may be made accessible to the controller 18 for optimization, through the interface 20.

The interface 20 is a port or interface card for network, phone, modem, cable, or other communications. The interface 20 may be a wired or wireless transceiver. Ethernet, Bluetooth, Wi-Fi, TCP/IP, or other communications formats may be used to communicate information to or from the pump station 22 to utilities (local distribution companies), other pump stations 22, SCADA, pipeline controllers, servers, or other devices. The interface 20 is used to receive, transmit, load, or access control information, sensor data, rate information, or communications for optimization. Hardware (e.g. display, keyboard, mouse, other optimizer systems, etc.) may be connected.

The memory 16 is a cache, buffer, RAM, removable media, hard drive, or other computer readable storage media. The memory 16 is controlled or formatted by the controller 18 or other processor. While shown as one memory 16, the memory 16 may be distributed, such as including memories for individual pump controllers, different parts of the pump station controller 18, and/or other memories.

The memory 16 is configured to store data used by the controller 18 for optimization. Calculated values, such as efficiency by speed and/or type of fluid, are stored. For a variable speed pump system, the efficiency as a function of speed for each type of fluid is stored. The values are stored as a curve, as values for a function fit to readings, a table, or other format. In one embodiment, the efficiency for each pump system 12A-D as a function of batch is stored. For a given batch, efficiency is provided for each pump system 12A-D. Different pump systems 12A-D have different efficiencies for each type of fluid. Similarly, a given variable speed pump system 12C-D has different efficiency for different speeds given a same batch.

The memory 16 may store other values, such as sensor readings. Utility rate information is stored. The rate information is received through the interface 20 directly from a local distribution company or from another source and stored in the memory 16. Alternatively, the rate information is entered by an operator at the pump station 22 or other party. The rate information is a rate schedule, such as a negotiated table of energy rates by amount of energy used. The rate schedule provides different rates for different levels of energy usage and/or different times (hours or days).

In one embodiment, the memory 16 stores instructions for programming the controller 18. The instructions for implementing the processes, methods, and/or techniques discussed above are provided on non-transitory computer-readable storage media or memories, such as a cache, buffer, RAM, removable media, hard drive or other computer readable storage media. Computer readable storage media include various types of volatile and nonvolatile storage media. The functions, acts or tasks illustrated in the figures or described herein are executed in response to one or more sets of instructions stored in or on computer readable storage media. The functions, acts or tasks are independent of the particular type of instructions set, storage media, processor or processing strategy and may be performed by software, hardware, integrated circuits, firmware, micro code and the like, operating alone or in combination. Likewise, processing strategies may include multiprocessing, multitasking, parallel processing and the like.

The controller 18 is a logic unit, programmable logic controller, or other control device. The controller 18 is a single device, such as a control processor or computer for supervisory control over other electronics of the pump station 22. In other embodiments, the controller 18 is a distributed control system, such as a collection of controllers for different electronics (e.g., pump controllers) including or not including a supervisory control device. In yet other embodiments, the controller 18 includes control devices outside of the pump station 22. For example, a server, workstation, or computer implementing SCADA is or is part of the controller 18. The controller 18 implements optimization in one device or distributed over two or more devices. For example, one device calculates efficiency (e.g., monitoring system), another device performs the optimization (e.g., station controller), and yet another device implements the optimization (e.g., pump controllers). Any controllers for implementing process instrumentation and/or dynamic control and monitoring may be used as part of the controller 18.

The controller 18 is configured by software, firmware, and/or hardware. In one embodiment, the controller 18 calculates values and uses the values to optimize. In other embodiments, the controller 18 receives data calculated by another device. The controller 18 may access a table from the memory 16. The table includes data appropriate for given sensor readings. Whether through looking up from prior calculations for optimization or calculating values and optimizing at the time, the controller 18 is configured to optimize operation of one of the pump systems 12A-D, multiple pump systems 12A-D, the pump station 22, or multiple pump stations 22.

In one embodiment, the controller 18 is configured to calculate the efficiency during operation of one or more (e.g., all) of the pump systems 12A-D. The controller 18 actively measures process variables and calculates actual pump efficiency for given batch or type of fluid. For example, the efficiency is calculated periodically, such as several times a minute, each hour, or on averages of time basis (e.g., hourly average). A window of the most recent efficiencies by batch or type of fluid is used to average the efficiencies, perform statistical analysis, and or stochastic process values, providing an up-to-date or actual efficiency.

Any efficiency measure may be used. For example, efficiency is measured as the hydraulic power divided by the shaft power. The hydraulic power is the difference in the input pressure to the output pressure, multiplied by the volume flow. The shaft power is measured by a force sensor or based on energy usage of the motor. Rather than or in addition, the efficiency of operation of a train or multiple pump systems together may be calculated, such as a pump train efficiency. Alternatively, the controller 18 accesses precalculated efficiencies, such as manufacturer provided efficiency curves.

The efficiency is of the pump, the pump system 12, and/or the motor. The controller 18 measures motor and/or pump efficiency (e.g., pump system efficiency). Selection of the most efficient pump units to operate may be based on a combination of the motor and pump efficiency. The most efficient pump system 12A-D is selected.

Other calculations may be performed by the controller 18. The pump curve may be calculated. The pump head as a function of the volume flow provides a pump curve. Other pump curves may be used. The deviation of the pump curve for each pump system 12A-D from expected or manufacturer provided pump curves may be determined. Other operational metrics may be calculated. The operational metrics may be used as constraints in optimization, variables in the optimization, and/or output for maintenance consideration.

The controller 18 is configured to select a sub-set of the pump systems 12A-D. For a given time, less than all of the pump systems 12A-D may be needed to provide the desired output pressure of the pumping station 22. At other times, all of the pump systems 12A-D may be needed or one or more pump systems 12 are not available due to repair or other reasons. The controller 18 determines the number and which pump systems 12A-D to use for a given batch. The sub-set of pump systems 12A-D is selected to provide the desired output pressure. The outlet pressure may itself be part of the optimization or may be a fixed value (e.g., a constraint in the optimization). Given a determined or set outlet pressure for the pump station 22, the controller 18 selects which pump systems 12A-D to use to provide the outlet pressure.

The selection is of fixed speed and/or variable speed pump systems 12A-D. Where a combination of fixed speed pump systems 12A-B provides the outlet pressure within a tolerance, the fixed speed pump systems 12A-B may be selected. The selection may include variable speed pump systems 12C-D. The speed of the variable speed pump systems 12C-D is also calculated. The selection of the combination of pump systems 12A-D and the speed of any variable speed pump systems 12C-D is optimized to provide the demanded outlet pressure.

The selection occurs in response to a change in the type of fluid or other event. Other events may include pump failure, power failure (e.g., use of a back-up generator), maintenance, or resetting of a valve. Other events may include a batch change at another pump station 22 where the relative contribution between pump stations 22 may be optimized.

The change in the type of fluid is provided based on the readings of the sensor 14 or information provided through the interface 20. For example, SCADA may output a time of an expected batch change. This time is used to implement the selection, whether the selection is made at that time or prior. As another example, the sensor 14 senses a change in density and/or viscosity. Where the change is by a threshold amount or more and/or over a given sampling period, the batch change is detected. In response, the controller 18 performs the selection for the new or recently changed batch. The type of fluid is indicated by the density and/or viscosity. In one embodiment, the pump assignments (which pump systems 12A-D are operated by variable speed drives and which, if any, are direct-on-line) is adjusted moments prior to or just after a new batch arrives at the pump station 22 to provide the most efficient operation. Any pump system 12 may be operated as direct-on-line or by a variable speed drive. Any number of variable speed drives may be provided in the pump station 22.

The controller 18 may calculate the optimum drive (variable speed, fixed speed) for each pump 12A-D. Primary pressure and flow control is achieved by varying the pump speed. Valve throttling is secondary and used in rare cases when pump speed control is not achieving the desired results. There are three equipment configuration types for typical pump stations 22 with a number N of pump systems 12. The optimization uses only as many pump systems 12 as needed based on the product schedule and desired flow rate. At any given time, there will be B pump systems 12 operating at a given station (B ranging from 1 to N). With N pump systems 12 and one variable speed drive (VSD), an initial condition is that no pumps are operating. The pump systems 12 are always started with the VSD. The pump systems 12 are not started directly on-line due to excessive impulse torques and in-rush currents. If only one pump system 12 is needed, that pump system 12 is started on the VSD and left running on the VSD. Speed will be modulated to regulate flow and pressure. If more than one pump is needed, the pump operating on VSD is accelerated to match the utility frequency, voltage and phase. The control system then transfers the connection and control of the motor from the VSD to the utility and then disconnects the VSD, leaving the pump system 12 running directly on-line. The next pump system 12 is started using the VSD. If only two pump systems 12 are needed, the first is left on line and the second is left running on the VSD. The second pump systems 12 speed is modulated to regulate flow and pressure. When two or more variable speed drives are available, the same start up process is used. The second pump system 12 may be started in one of two ways. The second pump system is started on the second VSD and the station 22 operates using both VSD. The station uses one or both VSDs to regulate pressure and flow. Alternatively, the first pump system 12 is left bypassed to the utility. Any number of pump systems 12 may be left operating on the VSD or direct on-line. One or more of the VSDs may be used to regulate flow and pressure.

The controller 18 may interface with flow control valves to determine most efficient station operation. For example, a flow control valve may be opened to increase overall efficiency while maintaining operational safety parameters. Control valve throttling is normally used at the bottom of an incline to avoid slack line conditions (e.g., fluid flowing too fast downhill causing vacuum pockets at the higher elevations).

The controller 18 is configured to optimize the selection of the combination of pump systems 12A-D. The optimization is based on the type of fluid or batch and the efficiencies of the pump systems 12A-D. Different pump systems 12A-D have different efficiency for different types of fluid. For example, pump 12A may have an efficiency of 85% for light crude and 70% for heavy crude. Pump 12B may have an efficiency of 87% for light crude and 69% for heavy crude. The pump systems 12A-D are selected based on the relative efficiency for the given batch. If both pumps 12A and B are fixed speed and are not both needed for the outlet pressure, the pump 12A is selected if the batch is light crude oil, and the pump 12B is selected if the batch is heavy crude oil.

The pump systems 12A-D with the greater efficiency in total given the type of fluid are selected. Different combinations of pump systems 12A-D providing the outlet pressure within a tolerance are examined for total efficiency. The combination with the greatest efficiency is selected. Alternatively or additionally, the pump systems 12A-D are sorted or ranked by efficiency for the given batch. The most efficient pump systems 12A-D are selected until the desired outlet pressure is provided. The least efficient pump systems 12A-D or pump systems 12A-D not used in the most efficient combination are not selected. The efficiencies are correlated to product type (batch or densities and viscosities) and rated for each pump 12A-D from most efficient to least efficient. The optimization algorithm focuses on optimizing the pump system assignments to correspond with the type of liquid (e.g., light crude oil, heavy crude oil, etc.) moving through the pipeline.

Where the efficiencies are calculated in an on-going manner, the efficiency used in optimizing the selection is based on one or more efficiencies calculated within a day of the selection or actual efficiencies based on recent operation of the pump system 12. This assumes the same type of fluid was provided within that day. Where the type of fluid was last provided more than a day in the past, then the efficiencies are based on the most recent measures. In alternative embodiments, the efficiencies are based on measures that are not updated or are updated with greater periods. Rather than actual or current efficiency, the manufacturer or other efficiencies may be used.

In an alternative or additional embodiment, the controller 18 is configured to select the sub-set as a function of utility rate information. The cost of powering the pump systems 12 is considered in the selection.

The outlet pressure for the pump station 22 may be varied. The outlet pressure may be greater or less, reducing or increasing the outlet pressure requirements of other (e.g., adjacent) pump stations 22. Where the rates are different for different pump stations 22, the outlet pressure may be set to account for this difference.

Figure 2 illustrates an example where three pump stations 22A-C separated by tens or hundreds of miles have different local distribution companies and corresponding electricity rates at a given time. The pump station 22B has the highest rate. Within outlet pressure constraints, the outlet pressure or pressure differential (e.g., inlet to outlet) is set lower for pump station 22B, thus reducing the electrical usage and corresponding cost. The outlet pressure or pressure differential for the other two pump stations 22A and C is set higher to account for the lesser of pump station 22B. Since the rate is less for pump station 22A, pump station 22A is set to contribute more of the short fall than pump station 22B. The controller 18 is a combination of control systems for pump stations 22A-C or a pipeline control system (e.g., SCADA). The controller 18 access data through the interface 20 and/or from the memory 16 to optimize across or between pump stations 22A-C.

Further rate information may be used instead or in addition to the current rate in setting the outlet pressure and/or selecting the sub-set of pumps 12. The power usage of each of the pump stations 22A-C is a given amount from a threshold. Greater or lesser power usage may result in a different rate being applied. By decreasing power below a threshold, a better rate may result. By avoiding increasing the power above a threshold, an increased rate may be avoided. By identifying an amount of excess before the rate is increased, an amount of variation or increase in the outlet pressure without causing increased costs due to greater rate may be identified.

The timing of the rates may be used. The outlet pressure is optimized for a current situation. Where the rates vary over time, the current optimization may be for a greater period, such as suffering increased costs under a current rate that will result in lesser costs over a longer period. Alternatively, the configuration (e.g., outlet or differential pressures and pump selections) is set to vary based on changes in the rates over time. The optimization may be calculated now for different rate situations, or the timing is used to later trigger another optimization.

The interface 20 is used to communicate with the other pump stations 22A-C. The communications may be between the pump stations 22A-C or with a SCADA that gathers the rate information. Alternatively, the rate information for adjacent or all pump stations 22A-C is provided to each pump station 22A-C. In other embodiments, each pump station 22 and/or the overall pipeline control system (e.g., SCADA) regularly, continuously, or periodically communicate with the utilities (i.e., local distribution companies), other pump stations 22A-C, a database, SCADA, or other source of rate information to determine the current electricity rates, thresholds for rate change, demand from other pump stations 22 (e.g., how close to the threshold the pump station 22 is operating), and any time considerations for the rates (e.g., how long the current rate is active).

Since the sub-set of pump systems 12 is based, in part, on the outlet pressure or pressure differential, the controller 18 selects the sub-set of the pump systems 12A-D based on the utility rate information. The variation in outlet pressure or pressure differential may or may not result in a different combination of pump systems 12A-D being selected. The introduction of power prices coincides with the optimization of pumps and type of liquid moving through the pipeline. Most pipelines move through multiple geographical territories that have different local distribution companies providing power at different rates, plans, and/or schemes. The optimization of the pump systems captures or includes these multiple kilowatt/hour schemes. The rate information is used as part of the optimization to reduce cost to the overall pipeline system in addition to reduce cost due to increase in efficiency. The pump system 12A-D with the lowest price per kilowatt is selected if optimum.

In a further additional or alternative embodiment, the controller 18 is configured to optimize the setting of the speed of any variable pump systems 12C-D. The setting of the speed may be optimized without other optimization or as part of optimizing for the selection of pump systems 12A-D and/or for rate minimization.

The variable speed pump systems 12C-D may have different efficiency at different speeds. This efficiency variation may be different for different batches or types of fluid. The efficiency by speed for each variable speed pump 12C-D for the given batch is used. In selecting pump systems 12A-D to provide the desired outlet pressure or pressure differential, the speed is also optimized. For example, it may be more efficient to use two variable speed pump systems 12C-D at low speed than one pump 12D at a higher speed, or vise versa. The relative speeds of multiple variable speed pump systems 12C-D may be selected to maximize efficiency.

Similarly, the cost of operating the variable speed pump 12C-D may be different for different speeds. The optimization of the outlet pressure or pressure contribution of a pumping station 22 may account for the energy usage as a function of speed of the variable speed pump 12C-D. The speed may be selected based on utility rate information, efficiency, and/or optimal sub-set of pump systems 12A-D.

The optimization is applied to existing pipeline infrastructure for leveraging, for example, operational expenditures (OPEX) or is incorporated in the development of new pipeline infrastructure. Alternatively or additionally, the optimization is applied to choose utility rate plans best for pipeline when negotiating with local distribution companies.

One or more of the pump stations 22 may go "out of service" due to an electric utility power failure or other cause. In cases like, this the pipeline 10 continues operating at the same flow rate or at a reduced capacity. The controllers 18 automatically adapt to this situation and optimize again based on a changing or changeable set of rules and or conditions, such as constraining the optimization based on maintaining the flow or keeping electric usage below the surcharge threshold. If pumping heavy crude and flow is more important (e.g., because the operator customer may penalize (loss-damage) the pipeline operator for lower flow, then up and down stream stations increase output to maintain the flow. The selections for the optimization account for this increased flow. If cost is more important, the pipeline control adapts to operating conditions that minimize overall cost while maintaining a minimum flow rate.

Figure 3 illustrates an example. The utility provides power to the variable frequency drive (VFD) 18. The variable frequency drive provides a set point for operating the variable speed pump 12. Based on the flow (Q), density (p), velocity (v), inlet pressure (P_{suc}), and/or outlet pressure (P_{dis}), the controller 18 calculates actual efficiency of the pump 12. For example, the relative contribution of the pump system 12 within the pump station 22 is optimized to provide an overall efficiency of the pump station 22 that results in reduced costs. The motor protection relay (MPR) may measuring the power used by the motor or other efficiency information.

Adjustments may also be made to the variable speed drive pump systems on electric utility rates of the pump station 22 and other pump stations 22 (e.g., adjacent up and/or downstream pump stations 22). For example, pump load at a higher cost pump station 22 is slightly reduced (e.g., by 1-20%) and shifted to the lower cost up and/or downstream pump stations 22 by increasing their total dynamic head (i.e., increase the variable speed drive speed set points). The variable speed drive may allow for more incremental shifts in contribution between pump stations 22.

Where the number of variables is small, such as selecting pump systems 12A-D based on measured efficiency, the optimization uses a program or logic chain. For example, the efficiencies of pumps 12 in a pump station 22 for a given batch are ranked, and the combination of higher efficiency pumps providing the needed outlet pressure is selected. A hierarchal approach may be used where the number of variables is larger, such as selecting a distribution of pressure contribution for pump stations 22 based on utility cost, then selecting the sub-set of pumps based on efficiency, and then selecting relative contribution of any variable speed pumps based on efficiency.

In other embodiments, a numerical optimization (e.g. mixed-integer modelling) is used. The values for the various variables are found that minimize the cost and/or maximize the efficiency. Any numerical optimization may be used, such as partial differential equations, game theory, or mixed integer optimization. Linear and/or non-linear optimization may be used.

The optimization is constrained. Limits are placed on the optimization. For example, the outlet pressure and/or pressure contribution of the pump station 22 is limited to be within a range. Also, availability and/or operability of pump systems 12 or pump station 22 may be limited. As another example, the number of pumps 12 and pump capabilities constrain the optimization. The sub-set is selected based, in part, on optimizing efficiency while constraining the options. Any constraints may be used. Example classes of constraints include mechanical, price-based flow (e.g., greater flow when crude prices are high), and/or maintenance events (e.g., repair)

Another example constraint is based on the rate information. Power or energy usage above a penalty level is avoided. The optimization is constrained to avoid any or minimize the number of occurrences of surpassing energy thresholds for increased rate. This constraint may avoid increased cost over days or months due to exceeding an energy threshold over a lesser period (e.g., minutes or hours).

In one embodiment, the mechanical performances of the pump systems 12 are used to constrain the optimization. The controller 18 is configured to compare pump performance (e.g., efficiency, flow rate, pressure contribution, speeds, or other) to manufacturer design. Any design curve may be compared to actual performance curves. Where the mechanical performance is sub-standard, the pump 12 may not be included in the selected sub-set even where the pump 12 is more efficient. Other mechanical performance with or without comparison to design may be used to constrain optimization. For example, the vibration of the pump system is monitored. If the vibration is above a threshold, the pump 12 may not be selected due to a need for maintenance.

Any identified deviance or problems may be output by the controller 18. The controller 18 may generate a trend analysis to show deviation between actual and designed performance.

As a batch arrives at a pump station 22 and/or pump 12, the speed and/or sub-set of pumps 12 is optimized for that batch. Similarly, timing for rates, such as a reduced rate, allows for optimization. Once a reduced rate is available, the optimization is performed. In other embodiments, the optimization depends on planning. The batch inventory of the pipeline is used to plan for optimization for different times as the batches pass through the pipeline. There may be 5-30 batch changes a day, so the pipeline 10, pump stations 22, and/or pump systems 12 may have many different configurations optimal for given times throughout the day. Timing or timing in combination with confirmation by the sensor 14 is used to switch to a new optimized configuration as the batches progress along the pipeline. In other embodiments, the optimization is less dynamic, such as being set for a day, week, or month.

The increase in efficiency and/or decrease in energy cost due to pump station optimization may result in substantial savings. Millions of dollars a year may be saved in a transcontinental pipeline. The small percentage shift in energy cost or increase in efficiency may save substantial amounts of money.

Figure 4 illustrates one embodiment of a flow chart for a method for pump station optimization. The speed of a variable speed pump, combination of pumps used in a pump station, and/or contribution to pumping between different pump stations is optimized.

The method is implemented by the pump station 22 of Figure 1, the controller 18 of Figures 1 or 3, the group of pump stations 22 of Figure 2, SCADA, or other control network. For example, a control system of a pump station performs acts 40-48. The control system (e.g., logic unit) uses an interface for communications, a memory for access to rate or other information, and sensors for detecting batches or determining efficiency. The control system controls which pumps to pump for a batch, the speed of any variable speed pumps, and/or the contribution between pump stations.

Additional, different, or fewer acts may be provided. For example, act 42 is not provided where rate information is not included in the optimization. As another example, act 46 is not provided where the optimization is performed by pump station rather than across different pump stations. In case of pipeline optimization, discrete pump station optimizer (on local controller 18) may be deactivated or overridden. In yet another example, acts for pre-loading power rates, pumping fluid in the pipeline, and/or triggering optimization are provided. Figure 4 includes a combination of optimizing the pumps in each pump station and relative contribution between different pump stations. Other methods may perform one or the other.

The acts are performed in the order shown or a different order. For example, the power rates are accessed in act 42 prior to act 40 or after act 44 (e.g., efficiency used to configure the pumps in act 44 without energy rate information). As another example, act 48 is performed as part of or in parallel with each of acts 44 and 46. In yet another example, acts 44 and 46 are performed as part of a same optimization of act 48.

In act 40, the actual status of the pipeline is determined by allocating actual batches to pump stations. The determination is at the pump stations, such as with sensors reading density and/or viscosity and the control system determining from the readings. Alternatively, the determination is by a valve controller at the head of the pipeline. The timing and/or volume are used to track the batches throughout the pipeline. In other embodiments, the timing and volume of the batches introduced to the pipeline is used with confirmation of the location of the batches or batch changes with sensors at the pump stations. In one embodiment, the sensors tell the control system when a batch actually arrives. The control system uses the scheduled arrival of the batch to pre-set some control actions when the batch actually arrives. The control system predicts or calculates prior to arrival how to optimize rather than just reacting to a new batch arriving at the station.

The batch inventory throughout the pipeline is determined. The batch inventory may be determined as a collection, such as a table indicating each batch and where the batch is located by time. Alternatively, the batch inventory is determined as batch detection at individual pump stations with or without collecting the batch information into one table or location.

In act 42, power rates are accessed. The controller 18 accesses the rates from memory, from the utility or local distribution company, from a server, or other location. The rates for different pump stations are accessed by the different pump stations and distributed to other pump stations. Other collections may be used, such as a pipeline SCADA server pushing rate information for all of the pump stations to the pump stations.

The power rates are the different rates charged for energy. The rates may be different over time and/or amount of usage (i.e., level). The rate schedules for power levels at which electricity rates are higher and/or lower and the timing of the rates are provided for optimization.

Other information may be accessed, such as efficiency information. Sensor values may be read and/or a history of such values accessed. The values are used to calculate a recent (e.g., within days or months) efficiency of pumps for a type of fluid. The efficiency by speed may also be accessed or calculated by access to sensor values. In alternative embodiments, previously calculated efficiencies are accessed.

In act 44, the control system configures pumps of the pump stations. The control system of each pump station configures the pumps with or without information or control from other control systems (e.g., SCADA). Each pump station is configured to pump the fluid in the pipeline.

The configuration is a selection of the pumps to pump the fluid. Given the batch at the pump station, the more efficient pumps are selected. Less efficient pumps are not selected. The efficiency of the pumps being used for a given batch is optimized. Given a desired pressure contribution for the pump station, the contribution from each pump for variable speed pumps and the combination of pumps to provide the pressure is selected. The criterion for selection is the efficiency, but other measures of performance may be used.

Each pump station may have a different type of fluid locally in the pipeline. The configuration of pumps to pump the relevant batch is selected for each pump station to provide greater efficiency than other combinations. Where efficiency is calculated from sensor values, the actual efficiencies are used in determining the pumps to use and/or speed set points to use at each pump station.

In act 46, a contribution of pump stations relative to other pump stations is set. The pipeline control system sets the contribution. At a pump station level, controllers of adjacent pump stations may negotiate the contribution. In another embodiment, one of the control systems for a pump station sets the relative contributions by performing optimization and then communicates the contributions to the other pump stations.

The contribution is set based on the accessed rates. Different pump stations operate with different efficiency and rates. Efficiency and/or rate are considered when optimizing the relative contribution. For example, the pumps of one pump station are set to provide a lower output pressure than the pumps of another pump station where the rate for the one pump station is higher than the rate for the other pump station. Due to differences in rates from the different local distribution companies supplying power, the cost of operating the pump stations may be different. By balancing efficiency and cost to operate, the cost for pumping the fluid may be reduced.

The contribution from any given pump station may be constrained. The constraint may be based on the availability of pumps. Another example constraint is based on the rates. A pump station may be constrained to operate at a rate level (i.e., prevented from having an energy demand causing an increase in rates). In other embodiments, the rate levels are not constrained, but are instead handled as part of the optimization. It may be more cost effective to have one pump station exceed a power threshold and operate at a higher rate to provide greater savings at other pump stations. Penalties due to exceeding a level at one time being applied to power provided for a longer period may be used as constraints or variables in the optimization.

In act 48, optimization is performed. The optimization is hierarchal or logical. Alternatively, fuzzy logic or machine-learnt optimization may be provided. In one embodiment, a numerical (e.g. mixed-integer) optimization is applied. The control system identifies the combination of pump systems, pump station pressure contribution, and/or speed set points that minimize the energy cost and/or maximizes the efficiency. Any optimization function weighting operating costs may be used. The energy cost may include a term for efficiency to account for the cost effects of greater efficiency. Alternatively, the speed set point, the sub-set of pumps to use, and the relative contribution of the pump stations are optimized separately.

While the invention has been described above by reference to various embodiments, it should be understood that many changes and modifications can be made without departing from the scope of the claims.

## Claims

1. A system for pump station optimization, the system comprising:
a pump station (22) having a plurality of pump systems (12) for a pipeline (10);
a sensor (14) configured to sense a type of fluid in the pipeline (10);
a memory (16) configured to store efficiency as a function of the type of fluid for each of the pump systems (12); the system being **characterised in that** it further comprises
a controller (18) configured to select a sub-set of the pump systems (12) as a function of the type of fluid and the efficiencies of the pump systems (12) for the type of fluid, the sub-set configured to provide an outlet pressure for the pump station (22), wherein the pump systems (12) comprise at least one fixed speed pump and at least one variable speed pump, wherein the efficiency for the variable speed pump includes efficiency as a function of speed by the type of fluid, and wherein the controller (18) is configured to select the variable speed pump and the speed of the variable speed pump as a function of the efficiency as a function of the speed and the type of fluid.

2. The system of claim 1, wherein the sensor (14) comprises a density, viscosity, or density and viscosity sensor, and wherein the controller (18) is configured to determine the type of fluid from fluid properties.

3. The system of claim 1, wherein the controller (18) is configured to select in response to a change in the type of fluid indicated by the sensor (14).

4. The system of claim 1, wherein the controller (18) is configured to select the sub-set of the pump systems (12) as the pump systems (12) with a greater efficiency for the type of fluid.

5. The system of claim 1, wherein the controller (18) is configured to calculate the efficiency during operation of the pump systems (12), the selection being based on the at least one of the efficiencies calculated within a day of the selection.

6. The system of claim 1, wherein the memory (16) is configured to store utility rate information, and wherein the controller (18) is configured to select the sub-set as a function of the utility rate information.

7. The system of claim 1, wherein the controller (18) is configured to set the outlet pressure for the pump station based on the utility rate information for the pump station and utility rate information for other pump stations.

8. The system of claim 1, wherein the controller (18) is configured to select the sub-set based on constraints for the pump systems (12) and the pump station, and wherein one of the constraints is mechanical performance of the pump systems (12), one of the pump systems (12) with a greater efficiency not included in the sub-set due to the mechanical performance or maintenance requirements.

9. The system of claim 1, wherein the controller (18) comprises a control system of the pump station and is configured to selection based on a mixed integer optimization.

10. A method for pump station optimization, the method comprising:
determining batches in a pipeline (10) at first and second pump stations;
accessing rates for first and second local distribution companies of power to the first and second pump stations, respectively;
configuring pump systems (12) of the first pump station and pump systems (12) of the second pump station to pump the batches in the pipeline (10); and
setting a contribution of the first pump station relative to the second pump station based on the rates,wherein the pump systems (12) comprise at least one fixed speed pump and at least one variable speed pump, wherein the efficiency for the variable speed pump includes efficiency as a function of speed by the type of fluid.

11. The method of claim 10, wherein setting comprises configuring the pump systems (12) of the first pump station to provide a lower output pressure than the pump systems (12) of the second pump station where the rate for the first local distribution company supplying the first pump station is higher than the rate for the second local distribution company.

12. The method of claim 10, wherein accessing comprises receiving rate schedules including power levels at which electricity rates are higher, and wherein setting comprises constraining the contribution based on the power levels.

13. The method of claim 10, wherein determining the batches comprises determining a batch inventory throughout the pipeline (10), wherein configuring comprises selecting sub-sets of the pump systems (12) at the first and second pump stations based on an optimization of efficiency of the pump systems (12) for the batch at the first pump station and the batch at the second pump station.

## Patentansprüche

1. System zur Pumpstationsoptimierung, das System umfassend:
eine Pumpstation (22), die eine Vielzahl von Pumpsystemen (12) für eine Rohrleitung (10) aufweist;
einen Sensor (14), der dazu ausgelegt ist, einen Typ von Fluid in der Rohrleitung (10) zu erfassen;
einen Speicher (16), der dazu ausgelegt ist, einen Wirkungsgrad in Abhängigkeit von dem Typ von Fluid für jedes der Pumpsysteme (12) zu speichern; wobei das System **dadurch gekennzeichnet ist, dass** es ferner umfasst:
eine Steuerung (18), die dazu ausgelegt ist, einen Teilsatz der Pumpsysteme (12) in Abhängigkeit von dem Typ von Fluid und den Wirkungsgraden der Pumpsysteme (12) für den Typ von Fluid auszuwählen, wobei der Teilsatz dazu ausgelegt ist, einen Auslassdruck für die Pumpstation (22) bereitzustellen, wobei die Pumpsysteme (12) zumindest eine Pumpe mit fester Drehzahl und zumindest eine Pumpe mit variabler Drehzahl umfassen, wobei der Wirkungsgrad für die Pumpe mit variabler Drehzahl einen Wirkungsgrad in Abhängigkeit von der Drehzahl durch den Typ von Fluid einschließt und wobei die Steuerung (18) dazu ausgelegt ist, die Pumpe mit variabler Drehzahl und die Drehzahl der Pumpe mit variabler Drehzahl in Abhängigkeit von dem Wirkungsgrad in Abhängigkeit von der Drehzahl und dem Typ von Fluid auszuwählen.

2. System nach Anspruch 1, wobei der Sensor (14) einen Dichte-, Viskositäts- oder Dichte- und Viskositätssensor umfasst und wobei die Steuerung (18) dazu ausgelegt ist, den Typ von Fluid aus Fluideigenschaften zu bestimmen.

3. System nach Anspruch 1, wobei die Steuerung (18) dazu ausgelegt ist, als Reaktion auf eine Änderung des Typs von Fluid, der durch den Sensor (14) angegeben wird, auszuwählen.

4. System nach Anspruch 1, wobei die Steuerung (18) dazu ausgelegt ist, den Teilsatz der Pumpsysteme (12) als die Pumpsysteme (12) mit einem höheren Wirkungsgrad für den Typ von Fluid auszuwählen.

5. System nach Anspruch 1, wobei die Steuerung (18) dazu ausgelegt ist, den Wirkungsgrad während des Betriebs der Pumpsysteme (12) zu berechnen, wobei die Auswahl auf dem zumindest einen der Wirkungsgrade, die innerhalb eines Tages der Auswahl berechnet werden, basiert.

6. System nach Anspruch 1, wobei der Speicher (16) dazu ausgelegt ist, Versorgungspreisinformationen zu speichern, und wobei die Steuerung (18) dazu ausgelegt ist, den Teilsatz in Abhängigkeit von den Versorgungspreisinformationen auszuwählen.

7. System nach Anspruch 1, wobei die Steuerung (18) dazu ausgelegt ist, den Auslassdruck für die Pumpstation basierend auf den Versorgungspreisinformationen für die Pumpstation und Versorgungspreisinformationen für andere Pumpstationen festzulegen.

8. System nach Anspruch 1, wobei die Steuerung (18) dazu ausgelegt ist, den Teilsatz basierend auf Beschränkungen für die Pumpsysteme (12) und die Pumpstation auszuwählen, und wobei eine der Beschränkungen die mechanische Leistung der Pumpsysteme (12) ist, wobei eines der Pumpsysteme (12) mit einem höheren Wirkungsgrad aufgrund der mechanischen Leistung oder Wartungsanforderungen nicht in dem Teilsatz enthalten ist.

9. System nach Anspruch 1, wobei die Steuerung (18) ein Steuersystem der Pumpstation umfasst und zu einer Auswahl basierend auf einer gemischt-ganzzahligen Optimierung ausgelegt ist.

10. Verfahren zur Pumpstationsoptimierung, das Verfahren umfassend:
Bestimmen von Chargen in einer Rohrleitung (10) an einer ersten und einer zweiten Pumpstation;
Zugreifen auf Preise für ein erstes und ein zweites örtliches Versorgungsunternehmen für Strom an die erste bzw. die zweite Pumpstation;
Konfigurieren von Pumpsystemen (12) der ersten Pumpstation und Pumpsystemen (12) der zweiten Pumpstation, um die Chargen in die Rohrleitung (10) zu pumpen; und
Festlegen eines Beitrags der ersten Pumpstation bezogen auf die zweite Pumpstation basierend auf den Preisen, wobei die Pumpsysteme (12) zumindest eine Pumpe mit fester Drehzahl und zumindest eine Pumpe mit variabler Drehzahl umfassen, wobei der Wirkungsgrad für die Pumpe mit variabler Drehzahl einen Wirkungsgrad in Abhängigkeit von der Drehzahl durch den Typ von Fluid einschließt.

11. Verfahren nach Anspruch 10, wobei das Festlegen ein Konfigurieren der Pumpsysteme (12) der ersten Pumpstation umfasst, um einen niedrigeren Auslassdruck als die Pumpsysteme (12) der zweiten Pumpstation bereitzustellen, wobei der Preis für das erste örtliche Versorgungsunternehmen, das die erste Pumpstation versorgt, höher als der Preis für das zweite örtliche Versorgungsunternehmen ist.

12. Verfahren nach Anspruch 10, wobei das Zugreifen ein Empfangen von Preislisten umfasst, die Leistungspegel einschließen, bei denen Strompreise höher sind, und wobei das Festlegen ein Beschränken des Beitrags basierend auf den Leistungspegeln umfasst.

13. Verfahren nach Anspruch 10, wobei das Bestimmen der Chargen ein Bestimmen eines Chargenbestands über die gesamte Rohrleitung (10) hinweg umfasst, wobei das Konfigurieren ein Auswählen von Teilsätzen der Pumpsysteme (12) an der ersten und der zweiten Pumpstation basierend auf einer Optimierung des Wirkungsgrads der Pumpsysteme (12) für die Charge an der ersten Pumpstation und die Charge an der zweiten Pumpstation umfasst.

## Revendications

1. Système d'optimisation de stations de pompage, le système comprenant :
une station de pompage (22) présentant une pluralité de systèmes de pompe (12) pour un pipeline (10) ;
un capteur (14) configuré pour détecter un type de fluide dans le pipeline (10) ;
une mémoire (16) configurée pour mémoriser le rendement en fonction du type de fluide pour chacun des systèmes de pompe (12) ;
le système étant **caractérisé en ce qu'**il comprend en outre
un contrôleur (18) configuré pour sélectionner un sous-ensemble des systèmes de pompe (12) en fonction du type de fluide et des rendements des systèmes de pompe (12) pour le type de fluide, le sous-système étant configuré pour fournir une pression de sortie de la station de pompage (22), dans lequel les systèmes de pompe (12) comprennent au moins une pompe à vitesse fixe et au moins une pompe à vitesse variable, dans lequel le rendement de la pompe à vitesse variable comporte le rendement en fonction de la vitesse par le type de fluide, et dans lequel le contrôleur (18) est configuré pour sélectionner la pompe à vitesse variable et la vitesse de la pompe à vitesse variable en fonction du rendement en fonction de la vitesse et du type de fluide.

2. Système selon la revendication 1, dans lequel le capteur (14) comprend un capteur de densité, viscosité, ou densité et viscosité, et dans lequel le contrôleur (18) est configuré pour déterminer le type de fluide à partir de propriétés de fluide.

3. Système selon la revendication 1, dans lequel le contrôleur (18) est configuré pour sélectionner en réponse à un changement du type de fluide indiqué par le capteur (14).

4. Système selon la revendication 1, dans lequel le contrôleur (18) est configuré pour sélectionner le sous-ensemble des systèmes de pompe (12) en tant que systèmes de pompe (12) ayant un meilleur rendement pour le type de fluide.

5. Système selon la revendication 1, dans lequel le contrôleur (18) est configuré pour calculer le rendement durant le fonctionnement des systèmes de pompe (12), la sélection étant basée sur l'au moins un des rendements calculés moins d'un jour après la sélection.

6. Système selon la revendication 1, dans lequel la mémoire (16) est configurée pour mémoriser des informations de tarif des services, et dans lequel le contrôleur (18) est configuré pour sélectionner le sous-ensemble en fonction des informations de tarif des services.

7. Système selon la revendication 1, dans lequel le contrôleur (18) est configuré pour régler la pression de sortie de la station de pompage sur la base des informations de tarif des services de la station de pompage et des informations de tarif des services d'autres stations de pompage.

8. Système selon la revendication 1, dans lequel le contrôleur (18) est configuré pour sélectionner le sous-ensemble sur la base de contraintes des systèmes de pompe (12) et de la station de pompage, et dans lequel une des contraintes est la performance mécanique des systèmes de pompe (12), un des systèmes de pompe (12) au rendement supérieur n'étant pas inclus dans le sous-ensemble en raison de la performance mécanique ou d'exigences de maintenance.

9. Système selon la revendication 1, dans lequel le contrôleur (18) comprend un système de commande de la station de pompage et est configuré pour une sélection sur la base d'une optimisation par entiers mixte.

10. Procédé d'optimisation de station de pompage, le procédé comprenant :
la détermination de lots dans un pipeline (10) au niveau de première et seconde stations de pompage ;
l'accès à des tarifs de première et seconde compagnies locales de distribution d'énergie aux première et seconde stations de pompage, respectivement ;
la configuration de systèmes de pompe (12) de la première station de pompage et de systèmes de pompe (12) de la seconde station de pompage pour pomper les lots dans le pipeline (10) ; et
le réglage d'une contribution de la première station de pompage relativement à la seconde station de pompage sur la base des tarifs, dans lequel les systèmes de pompe (12) comprennent au moins une pompe à vitesse fixe et au moins une pompe à vitesse variable, dans lequel le rendement de la pompe à vitesse variable comporte le rendement en fonction de la vitesse par le type de fluide.

11. Procédé selon la revendication 10, dans lequel le réglage comprend la configuration des systèmes de pompe (12) de la première station de pompage pour fournir une pression de sortie inférieure à celle des systèmes de pompe (12) de la seconde station de pompage quand le tarif de la première compagnie locale de distribution fournissant la première station de pompage est supérieur au tarif de la seconde compagnie locale de distribution.

12. Procédé selon la revendication 10, dans lequel l'accès comprend la réception de calendriers de tarifs comportant des niveaux d'énergie auxquels les tarifs d'électricité sont supérieurs, et dans lequel le réglage comprend la contrainte de la contribution sur la base des niveaux d'énergie.

13. Procédé selon la revendication 10, dans lequel la détermination des lots comprend la détermination d'un inventaire de lots à travers le pipeline (10), dans lequel la configuration comprend la sélection de sous-ensembles des systèmes de pompe (12) au niveau des première et seconde stations de pompage en fonction d'une optimisation du rendement des systèmes de pompe (12) pour le lot au niveau de la première station de pompage et le lot au niveau de la seconde station de pompage.
